# FASCICULE DE BREVET EUROPEEN

(11) **EP 2 569 173 B1**
(45) Date de publication et mention de la délivrance du brevet: **21.10.2015**
(21) Numéro de dépôt: 11718417.6
(22) Date de dépôt: 10.05.2011
(51) Int. Cl.: B60C 19/12, B60C 1/00, B60C 5/14, C08L 53/00, C08L 67/00

(54) **OBJET PNEUMATIQUE POURVU D'UNE COUCHE ÉTANCHE AUX GAZ À BASE D'UN ÉLASTOMÈRE THERMOPLASTIQUE ET D'UN THERMOPLASTIQUE**
PNEUMATISCHES OBJEKT MIT EINER GASDICHTEN SCHICHT AUS EINEM THERMOPLASTISCHEN ELASTOMERE UND EINEM THERMOPLAST
PNEUMATIQUE OBJECT PROVIDED WITH A GAS TIGHT LAYER BASED ON A THERMOPLASTIC ELASTOMER AND A THERMOPLASTIC

(30) Priorité: 12.05.2010 FR 1053744
(43) Date de publication de la demande: 20.03.2013
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: ABAD, Vincent, F-63040 Clermont-Ferrand Cedex 9 (FR); CUSTODERO, Emmanuel, F-63040 Clermont-Ferrand Cedex 9 (FR); LEMAL, Vincent, F-63040 Clermont-Ferrand Cedex 9 (FR)
(74) Mandataire: Dequire, Philippe Jean-Marie Denis
(86) Numéro de dépôt international: PCT/EP2011/057527
(87) Numéro de publication internationale: WO 2011/141466

(56) Documents cités:
- WO-A1-2009/119232
- WO-A1-2010/012413
- FR-A1- 2 916 680

## Description

La présente invention est relative aux objets « pneumatiques » ou articles gonflables, c'est-à-dire, par définition, aux objets qui prennent leur forme utilisable quand on les gonfle d'air ou d'un gaz de gonflage équivalent.

Elle se rapporte plus particulièrement aux couches étanches aux gaz assurant l'étanchéité de ces objets pneumatiques, en particulier celle des bandages pneumatiques.

Dans un bandage pneumatique conventionnel du type « tubeless » (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse et plus généralement le reste du pneumatique d'un risque d'oxydation dû à la diffusion d'air provenant de l'espace intérieur au bandage.

Cette fonction de couche interne ou «gomme intérieure» (*"inner liner*") étanche est aujourd'hui remplie par des compositions à base de caoutchouc butyl (copolymère d'isobutylène et d'isoprène), reconnues depuis fort longtemps pour leurs excellentes propriétés d'étanchéité.

Toutefois, un inconvénient bien connu des compositions à base de caoutchouc butyl est qu'elles présentent des pertes hystérétiques importantes, qui plus est sur un spectre large de température, inconvénient qui pénalise la résistance au roulement des bandages pneumatiques.

Diminuer l'hystérèse de ces couches internes d'étanchéité et donc in fine la consommation de carburant des véhicules automobiles, est un objectif général auquel se heurte la technologie actuelle.

Le document WO 2009/007064 des Demanderesses divulgue un objet pneumatique pourvu d'une couche étanche aux gaz de gonflage, dans lequel la couche étanche comporte une composition élastomère comprenant au moins un élastomère thermoplastique styrénique (« TPS »), une charge lamellaire et optionnellement une huile polybutène. Comparativement à un caoutchouc butyl, l'élastomère TPS présente l'avantage majeur, en raison de sa nature thermoplastique, de pouvoir être travaillé tel quel à l'état fondu (liquide), et par conséquent d'offrir une possibilité de mise en oeuvre simplifiée tout en assurant une étanchéité au moins égale, sinon supérieure à celle obtenue avec une couche étanche conventionnelle en caoutchouc butyl.

On constate cependant une limitation de la performance en endurance de ces couches étanches lorsque le taux de charges lamellaires devient notable.

FR 2 916 680 A1 divulgue un objet pneumatique selon le préambule de la revendication 1.

En poursuivant leurs recherches, les Demanderesses on découvert à présent une composition dans laquelle l'utilisation de charges lamellaires est optionnelle, l'élément important étant l'utilisation de matériaux thermoplastiques incompatibles avec l'élastomère thermoplastique constituant la matrice de la couche étanche.

Ainsi, l'invention concerne un objet pneumatique ou article gonflable pourvu d'une couche élastomère étanche aux gaz, comportant, à titre de seul élastomère ou d'élastomère majoritaire en poids, au moins un élastomère thermoplastique à bloc polyisobutylène, caractérisé en ce que ladite couche élastomère étanche comporte des microdomaines polymériques thermofusibles à base d'au moins un matériau thermoplastique.

Les microdomaines polymériques thermofusibles ont l'avantage de renforcer l'étanchéité aux gaz de la couche élastomère étanche. Ces microdomaines polymériques thermofusibles sont obtenus lors de la fabrication de la couche élastomère étanche. Cette couche élastomère étanche est réalisée par le malaxage à l'état fondu de l'élastomère thermoplastique à bloc polyisobutylène, constituant de la matrice de la couche étanche élastomère, et du matériau thermoplastique constituant de ces microdomaines polymériques thermofusibles. Après refroidissement de ce mélange, on observe la présence de ces microdomaines, notamment par observations au microscope électronique à balayage.

L'invention a aussi pour objet un procédé de fabrication d'une composition élastomère étanche aux gaz comportant, à titre de seul élastomère ou d'élastomère majoritaire en poids, un élastomère thermoplastique à bloc polyisobutylène de température de fusion ou de ramollissement donnée (T_{M1}) et un matériau thermoplastique de température de fusion ou de ramollissement donnée (T_{M2}) au moyen d'une outil d'extrusion avec au moins une alimentation et une sortie, comportant les étapes suivantes :
- introduire l'élastomère thermoplastique et le matériau thermoplastique dans la ou les alimentations de l'outil d'extrusion ;
- faire fondre et malaxer les constituants en portant l'ensemble à une température de malaxage (T_{M}) supérieure aux deux températures de fusion ou de ramollissement données (T_{M1}, T_{M2}) pendant le transfert dans le corps de l'outil d'extrusion ; et
- distribuer la composition résultante à la sortie de l'outil d'extrusion avec une filière de section adaptée.

L'invention concerne plus particulièrement les bandages pneumatiques destinés à équiper des véhicules à moteur de type tourisme, SUV ("*Sport Utility V*e*hicles*"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### I. DESCRIPTION DES FIGURES

L'invention ainsi que ses avantages seront aisément compris à la lumière de la description et des exemples de réalisation qui suivent, ainsi que des figures annexées suivantes dans lesquelles :
- la figure 1 représente de manière très schématique une coupe radiale d'un bandage pneumatique conforme à l'invention ;
- la figure 2 présente une photographie d'une coupe au microscope électronique à balayage d'une composition thermoplastique élastomère comportant une charge lamellaire ; et
- la figure 3 présente une photographie similaire pour une composition thermoplastique élastomère comportant des microdomaines thermoplastiques.

### II. DESCRIPTION DETAILLEE DE L'INVENTION

Dans la présente description, sauf indication expresse différente, tous les pourcentages (%) indiqués sont des % en masse. On entend par pourcentage volumique d'un constituant d'une composition, le pourcentage en volume de ce constituant rapporté au volume de l'ensemble de la composition.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### II-1. Composition élastomère étanche aux gaz

L'objet pneumatique selon l'invention a pour caractéristique essentielle d'être pourvu d'une couche élastomère étanche aux gaz de gonflage, comportant au moins, à titre de seul élastomère ou d'élastomère majoritaire en poids présent dans ladite composition, un élastomère thermoplastique à bloc polyisobutylène, auquel est associé un matériau thermoplastique, et optionnellement une huile d'extension de l'élastomère thermoplastique à bloc polyisobutylène.

### II-1-A. Élastomère thermoplastique à bloc polyisobutylène

Les élastomères thermoplastiques ont une structure intermédiaire entre polymères thermoplastiques et élastomères. Ils sont constitués de séquences rigides thermoplastiques reliées par des séquences souples élastomères, par exemple polybutadiène, polyisoprène, poly(éthylène/butylène), ou encore polyisobutylène. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple unités styrène et unités isoprène pour un copolymère blocs styrène/ isoprène/ styrène).

La masse moléculaire moyenne en nombre (notée Mn) de l'élastomère thermoplastique à bloc polyisobutylène (ci-après en abrégé « TPEI ») est préférentiellement comprise entre 30 000 et 500 000 g/mol, plus préférentiellement comprise entre 40 000 et 400 000 g/mol. En dessous des minima indiqués, la cohésion entre les chaînes du TPEI, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation de l'élastomère thermoplastique à bloc polyisobutylène ou TPEI dans une composition pour un bandage pneumatique.

La masse moléculaire moyenne en nombre (Mn) du TPEI est déterminée de manière connue, par chromatographie d'exclusion stérique (SEC). L'échantillon est préalablement solubilisé dans du tétrahydrofurane à une concentration d'environ 1 g/l; puis la solution est filtrée sur filtre de porosité 0,45 µm avant injection. L'appareillage utilisé est une chaîne chromatographique « WATERS alliance ». Le solvant d'élution est le tétrahydrofurane, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) du TPEI est de préférence inférieur à 3 ; plus préférentiellement Ip est inférieur à 2 et encore plus préférentiellement inférieur à 1,5.

Le bloc élastomère est composé majoritairement du monomère isobutylène polymérisé. De préférence, le bloc polyisobutylène du copolymère à blocs présente une masse moléculaire moyenne en nombre ("Mn") allant de 25 000 g/mol à 350 000 g/mol, de préférence 35 000 g/mol à 250 000 g/mol de manière à conférer à l'élastomère thermoplastique de bonnes propriétés élastomériques et une tenue mécanique suffisante et compatible avec l'application gomme interne d'un bandage pneumatique.

De préférence, le bloc polyisobutylène du TPEI ou copolymère à blocs présente en outre une température de transition vitreuse ("Tg") inférieure ou égale à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg du bloc polyisobutylène du copolymère à blocs est plus préférentiellement encore inférieure à - 50°C.

Le bloc polyisobutylène du TPEI peut aussi comprendre avantageusement également un taux d'unités issues d'un ou de plusieurs diènes conjugués insérées dans la chaîne polymérique allant préférentiellement jusqu'à 16% en poids par rapport au poids du bloc polyisobutylène. De préférence, le taux va de 0,5 % à 16 %. Au dessus de 16%, on peut observer une baisse de la résistance à la thermooxydation et à l'oxydation à l'ozone de la couche étanche contenant l'élastomère thermoplastique à bloc polyisobutylène utilisée dans un pneumatique.

Les diènes conjugués pouvant être copolymérisés avec l'isobutylène pour constituer le bloc polyisobutylène sont des diènes conjugués en C₄ - C₁₄. De préférence, ces diènes conjugués sont choisis parmi l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est l'isoprène ou un mélange contenant de l'isoprène.

Le bloc polyisobutylène, selon un aspect avantageux d'un objet de l'invention, peut être halogéné et comporter des atomes d'halogène dans sa chaîne. Cette halogénation permet d'améliorer la compatibilité de la couche étanche avec les autres éléments adjacents constitutifs de l'objet pneumatique, notamment d'un bandage pneumatique. L'halogénation se fait au moyen de brome ou de chlore, préférentiellement du brome, sur les unités issues de diènes conjugués de la chaîne polymérique du bloc polyisobutylène. Seule une partie de ces unités réagit avec l'halogène.

Selon un premier mode de réalisation, le TPEI est choisi parmi les élastomères thermoplastiques styréniques à bloc polyisobutylène (« TPSI »).

Le ou les blocs thermoplastiques complémentaires du bloc polyisobutylène (notés ci-après « Bloc Complémentaire ») sont ainsi constitués d'au moins un monomère polymérisé à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

De préférence, l'élastomère thermoplastique TPSI est un copolymère à blocs polystyrène et polyisobutylène.

Préférentiellement, un tel copolymère blocs est un copolymère dibloc styrène/ isobutylène (en abrégé « SIB »).

Plus préférentiellement encore, un tel copolymère blocs est un copolymère tribloc styrène/ isobutylène/ styrène (en abrégé « SIBS »).

Selon un mode de réalisation préférentiel de l'invention, le taux pondéral de styrène (non substitué ou substitué) dans l'élastomère styrénique est compris entre 5% et 50%. En dessous du minimum indiqué, le caractère thermoplastique de l'élastomère risque de diminuer de manière sensible tandis qu'au-dessus du maximum préconisé, l'élasticité de la couche étanche peut être affectée. Pour ces raisons, le taux de styrène est plus préférentiellement compris entre 10 et 40%, en particulier entre 15 et 35%.

De préférence, les températures de transition vitreuse des Blocs Complémentaires constitués à partir de monomères polymérisés styréniques sont supérieures ou égales à 100°C, préférentiellement supérieures ou égales à 130°C, encore plus préférentiellement supérieures ou égales à 150°C, voire même supérieures ou égales à 200°C.

L'élastomère TPSI, étendu optionnellement avec une huile polybutène, est préférentiellement le seul élastomère thermoplastique constituant de la matrice de la couche élastomère étanche aux gaz.

Les élastomères TPSI peuvent être mis en oeuvre de façon classique, par extrusion ou moulage, par exemple à partir d'une matière première disponible sous la forme de billes ou de granulés.

Les élastomères TPSI sont disponibles commercialement, vendus par exemple en ce qui concerne les SIB et SIBS par la société KANEKA sous la dénomination « SIBSTAR » (e.g. "Sibstar 103T", "Sibstar 102T", "Sibstar 073T" ou "Sibstar 072T" pour les SIBS, "Sibstar 042D" pour les SIB). Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPSI, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146).

Selon un second mode de réalisation, les élastomères TPEI peuvent aussi comprendre au moins un Bloc Complémentaire constitué à partir de monomères polymérisés autres que des monomères styréniques (en abrégé « TPNSI »). De tels monomères peuvent être choisis parmi les composés suivants et leurs mélanges :
- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80 ;
- les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile et leurs mélanges. On peut citer plus particulièrement, l'acrylate d'adamantyle, le crotonate d'adamantyle, le sorbate d'adamantyle, l'acrylate de 4-biphénylyle, l'acrylate de tertio-butyle, l'acrylate de cyanométhyle, l'acrylate de 2-cyanoéthyle, l'acrylate de 2-cyanobutyle, l'acrylate de 2-cyanohexyle, l'acrylate de 2-cyanoheptyle, l'acrylate de 3,5-diméthyladamantyle, le crotonate de 3,5-diméthyladamantyle, l'acrylate d'isobornyle, l'acrylate de pentachlorobenzyle, l'acrylate de pentaflurobenzyle, l'acrylate de pentachlorophényle, l'acrylate de pentafluorophényle, le méthacrylate d'adamantyle, le méthacrylate de 4-tert-butylcyclohexyle, le méthacrylate de tert-butyle, le méthacrylate de 4-tert-butylphényle, le méthacrylate de 4-cyanophényle, le méthacrylate de 4-cyanométhylphényle, le méthacrylate de cyclohexyle, le méthacrylate de 3,5-diméthyladamantyle, le méthacrylate de diméthylaminoéthyle, le méthacrylate de 3,3-diméthylbutyle, l'acide méthacrylique, le méthacrylate de méthyle, le méthacrylate d'éthyle, le méthacrylate de phényle, le méthacrylate d'iso-bornyle, le méthacrylate de tétradécyle, le méthacrylate de triméthylsilyle, le méthacrylate de 2,3-xylényle, le méthacrylate de 2,6-xylényle, l'acrylamide, le N-sec-butylacrylamide, le N-tert-butylacrylamide, le N,N-diisopropylacrylamide, le N-1méthylbutylacrylamide, le N-méthyl-N-phénylacrylamide, le morpholylacrylamide, le piperidylacrylamide, le N-tert-butylméthacrylamide, le 4-butoxycarbonylphénylméthacrylamide, le 4-carboxyphénylméthacrylamide, le 4-méthoxycarbonylphénylméthacrylamide, le 4-éthoxycarbonylphénylméthacrylamide, le cyanoacrylate de butyle, le chloroacrylate de méthyle, le chloroacrylate d'éthyle, le chloroacrylate d'isopropyle, le chloroacrylate d'isobutyle, le chloroacrylate de cyclohexyle, le fluorométhacrylate de méthyle, le phénylacrylate de méthyle, l'acrylonitrile, le méthacrylonitrile, et leurs mélanges.

De préférence, les températures de transition vitreuse de ces Blocs Complémentaires constitués à partir de monomères polymérisés autres que des monomères styréniques sont supérieures ou égales à 100°C, préférentiellement supérieures ou égales à 130°C, encore plus préférentiellement supérieures ou égales à 150°C, voire même supérieures ou égales à 200°C.

Selon une variante, le monomère polymérisé autre qu'un monomère styrénique peut être copolymérisé avec au moins un autre monomère de manière à former un bloc thermoplastique rigide. Selon cet aspect, la fraction molaire en monomère polymérisé autre qu'un monomère styrénique, par rapport au nombre total de motifs du bloc thermoplastique, doit être suffisante pour atteindre une Tg supérieure ou égale à 100°C, préférentiellement supérieure ou égale à 130°C, encore plus préférentiellement supérieure ou égale à 150°C, voire même supérieure ou égale à 200°C. Avantageusement la fraction molaire de cet autre co-monomère peut aller de 0 à 90%, plus préférentiellement de 0 à 75% et encore plus préférentiellement de 0 à 50%.

A titre d'illustration, cet autre monomère susceptible de copolymériser avec le monomère polymérisé autre qu'un monomère styrénique, peut être choisi parmi les monomères diènes, plus particulièrement, les monomères diènes conjugués ayant 4 à 14 atomes de carbone, et les monomères de type vinylaromatiques ayant de 8 à 20 atomes de carbone.

Lorsque le co-monomère est un diène conjugué ayant 4 à 14 atomes de carbone, il représente avantageusement une fraction molaire par rapport au nombre total de motifs du bloc thermoplastique allant de 0 à 25%. A titre de diènes conjugués utilisables dans les blocs thermoplastiques selon un objet de l'invention conviennent ceux décrit plus haut, à savoir l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,5-diméthyl-1,3-hexadiène, le 2-néopentylbutadiène, le 1,3-cyclopentadiène, le 1,3-cyclohexadiène, 1-vinyl-1,3-cyclohexadiène ou leurs mélanges.

Lorsque le co-monomère est de type vinylaromatique, il représente avantageusement une fraction en motifs sur le nombre total de motifs du Bloc Complémentaire de 0 à 90%, préférentiellement allant de 0 à 75% et encore plus préférentiellement allant de 0 à 50%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

On peut citer à titre d'exemples illustratifs mais non limitatifs, des mélanges de co-monomères et pouvant être utilisés pour la préparation des Blocs Complémentaires, constitués d'indène et de dérivés du styrène, notamment le para-méthylstyrène ou le para-tertiobutyle styrène. L'homme de l'art pourra alors se référer aux documents J.E. Puskas, G. Kaszas, J.P. Kennedy, W.G. Hager, Journal of Polymer Science part A : Polymer Chemistry 1992 30, 41 ou J.P. Kennedy, S. Midha, Y. Tsungae, Macromolecules (1993) 26, 429.

Préférentiellement, un élastomère thermoplastique TPNSI est un copolymère dibloc : bloc thermoplastique / bloc isobutylène. Plus préférentiellement encore, un tel élastomère thermoplastique TPNSI est un copolymère tribloc : bloc thermoplastique / bloc isobutylène / bloc thermoplastique.

### Préparation des élastomères thermoplastiques TPNSI

Les élastomères thermoplastiques TPNSI tels que définis pour la mise en oeuvre de l'invention peuvent être préparés par des procédés de synthèse connus en soi et décrits dans la littérature. L'homme de l'art saura choisir les conditions de polymérisation adéquates et réguler les différents paramètres des procédés de polymérisation afin d'aboutir aux caractéristiques spécifiques de structure de l'élastomère thermoplastique utile pour la mise en oeuvre de l'invention.

Plusieurs stratégies de synthèse peuvent être mises en oeuvre en vue de préparer les copolymères selon l'invention.

Une première consiste en une première étape de synthèse du bloc « polyisobutylène » par polymérisation cationique vivante des monomères à polymériser au moyen d'un amorceur mono-fonctionnel, di-fonctionnel ou poly-fonctionnel connu de l'homme de l'art, suivie de la seconde étape de synthèse du ou des Blocs Complémentaires et par ajout du monomère à polymériser sur le polyisobutylène vivant obtenu dans la première étape. Ainsi, ces deux étapes sont consécutives, ce qui se traduit par l'ajout séquencé :
- des monomères à polymériser pour la préparation du bloc « polyisobutylène » ;
- des monomères à polymériser pour la préparation du ou des Blocs Complémentaires.

A chaque étape, le ou les monomères à polymériser peuvent ou non être ajoutés sous la forme d'une solution dans un solvant tel que décrit ci-après, en présence ou non d'un acide ou d'une base de Lewis tels que décrits ci-après.

Chacune de ces étapes peut être réalisée dans un même réacteur ou dans deux réacteurs de polymérisation différents. A titre préférentiel, ces deux étapes sont réalisées dans un seul et unique réacteur (synthèse en « one-pot »).

La polymérisation cationique vivante s'effectue classiquement en moyen d'un amorceur difonctionnel ou polyfonctionnel et éventuellement d'un acide de Lewis jouant le rôle de co-amorceur afin de former in situ un carbocation. Habituellement, sont ajoutés des composés électro-donneurs afin de conférer à la polymérisation un caractère vivant.

A titre d'illustration, les amorceurs di-fonctionnels ou polyfonctionnels utilisables pour la préparation des copolymères selon l'invention peuvent être choisis parmi le 1,4-di(2-méthoxy-2-propyl)-benzène (ou « dicumylméthyl éther »), le 1,3,5-tri(2-méthoxy-2-propyl)-benzène (ou « tricumylméthyléther »), le 1,4-di(2-chloro-2-propyl)-benzène (ou « dicumyl chloride »), le 1,3,5-tri(2-chloro-2-propyl)-benzène (ou «tricumyl chloride »), le 1,4-di(2-hydroxy-2-propyl)-benzène, le 1,3,5-tri(2-hydroxy-2-propyl)-benzène, le 1,4-di(2-acétoxy-2-propyl)-benzène, le 1,3,5-tri(2-acétoxy-2-propyl)-benzène, le 2,6-dichloro-2,4,4,6-tétraméthylheptane, le 2,6-dihydroxy-2,4,4,6-heptane. A titre préférentiel, sont utilisés les dicumyl éthers, les tricumyl éthers, les halogénures de dicumyle ou les halogénures de tricumyle.

Les acides de Lewis peuvent être choisis parmi les halogénures de métaux, de formule générale MXn où M est un élément choisi parmi Ti, Zr, Al, Sn, P, B, et X est un halogène tel que Cl, Br, F ou I et n correspondant au degré d'oxydation de l'élément M. On citera par exemple TiCl₄, AlCl₃, BCl₃, BF₃, SnCl₄, PCl₃, PCl₅. Parmi ces composés TiCl₄, AlCl₃ et BCl₃ sont utilisés à titre préférentiel, et TiCl₄ à titre encore plus préférentiel.

Les composés électro-donneurs peuvent être choisis parmi les bases de Lewis connues, tels que les pyridines, les amines, les amides, les esters, les sulfoxydes et autres. Parmi eux sont préférés le DMSO (diméthylsulfoxyde) et le DMAc (diméthylacétamide).

La polymérisation cationique vivante s'effectue dans un solvant inerte apolaire ou dans un mélange de solvants inertes apolaire et polaire.

Les solvants apolaires pouvant être utilisés pour la synthèse des copolymères selon l'invention sont par exemple les solvants hydrocarbonés, aliphatiques, cycloaliphatiques ou aromatiques, tels que l'hexane, l'heptane, le cyclohexane, le méthylcyclohexane, le benzène ou le toluène.

Les solvants polaires pouvant être utilisés pour la synthèse des copolymères selon l'invention sont par exemple les solvants halogénés tels que les halogénures d'alcane, comme le chlorure de méthyle (ou chloroforme), le chlorure d'éthyle, le chlorure de butyle, le chlorure de méthylène (ou dichlorométhane) ou les chlorobenzènes (mono-, di- ou tri-chloro).

L'homme de l'art saura choisir la composition des mélanges de monomères à utiliser en vue de préparer les copolymères élastomériques thermoplastiques à blocs selon l'invention ainsi que les conditions de température adéquates en vue d'atteindre les caractéristiques de masses molaires de ces copolymères.

A titre d'exemple illustratif mais non limitatif, et afin de mettre en oeuvre cette première stratégie de synthèse, l'homme de l'art pourra se référer aux documents suivants pour la synthèse d'un copolymère bloc à base d'isobutylène et de :
- acénaphtylène : l'article de Z. Fodor et J.P. Kennedy, Polymer Bulletin 1992 29(6) 697-705 ;
- indène : le document de brevet US4946899 par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577
- isoprène : les documents G. Kaszas, J.E. Puskas, .P. Kennedy Applied Polymer Science (1990) 39(1) 119-144 et J.E. Puskas, G. Kaszas,J.P. Kennedy, Macromolecular Science, Chemistry A28 (1991) 65-80.

Une deuxième stratégie de synthèse consiste à préparer séparément :
- un bloc « polyisobutylène » téléchélique ou fonctionnel à une ou plusieurs de ses extrémités de chaînes par polymérisation cationique vivante au moyen d'un amorceur mono-fonctionnel, di-fonctionnel ou poly-fonctionnel, suivie éventuellement d'une réaction de fonctionnalisation sur une ou plusieurs extrémités de chaînes,
- le ou les Blocs Complémentaires vivants, par exemple par polymérisation anionique,
- puis à faire réagir l'un et l'autre pour l'obtention d'un copolymère bloc utile à la mise en oeuvre de l'invention. La nature des fonctions réactives à au moins une des extrémités de chaînes du bloc « polyisobutylène » et la proportion de chaînes vivantes du polymère constituant le Bloc Complémentaire, par rapport à la quantité de ces fonctions réactives seront choisies par l'homme de l'art pour l'obtention d'un copolymère bloc utile à la mise en oeuvre de l'invention.

Une troisième stratégie de synthèse consiste à réaliser dans cet ordre :
- la synthèse d'un bloc « polyisobutylène » téléchélique ou fonctionnel à une ou plusieurs de ses extrémités de chaînes par polymérisation cationique vivante au moyen d'un amorceur mono-fonctionnel, di-fonctionnel ou polyfonctionnel ;
- la modification en bout de chaîne de ce « polyisobutylène » de manière à introduire une unité monomère pouvant être lithiée ;
- éventuellement, l'ajout supplémentaire d'une unité monomère pouvant être lithiée et conduire à une espèce capable d'initier une polymérisation anionique, tel que par exemple le 1,1-diphényléthylène ;
- enfin, l'ajout du monomère polymérisable et d'éventuels co-monomères par voie anionique.

A titre d'exemple pour la mise en oeuvre d'une telle stratégie de synthèse, l'homme de l'art pourra se référer à la communication de Kennedy et Price, ACS Symposium, 1992, 496, 258-277 ou à l'article de Faust et al. : Facile synthesis of diphenylethylene end-functional polyisobutylene and its applications for the synthesis of block copolymers containing poly(methacrylate)s, par Dingsong Feng, Tomoya Higashihara and Rudolf Faust, Polymer, 2007, 49(2), 386-393).

L'halogénation du copolymère selon l'invention est réalisée selon toute méthode connue de l'homme de l'art, notamment celles utilisées pour l'halogénation du caoutchouc butyl et peut se faire par exemple au moyen de brome ou de chlore, préférentiellement du brome, sur les unités issues de diènes conjugués de la chaîne polymérique du bloc « polyisobutylène » et/ou du ou des blocs thermoplastiques.

Dans certaines variantes de l'invention selon lesquelles l'élastomère thermoplastique est étoilé ou encore branché, les procédés décrits par exemple dans les articles de Puskas J. Polym. Sci Part A : Polymer Chemistry, vol 36, pp85 92 (1998) et Puskas, J. Polym. Sci Part A : Polymer Chemistry, vol 43, pp1811-1826 (2005) peuvent être mis en oeuvre par analogie pour obtenir des blocs « polyisobutylène » étoilés, branchés ou dendrimères vivants.

L'homme du métier saura alors choisir la composition des mélanges de monomères à utiliser en vue de préparer les copolymères selon l'invention ainsi que les conditions de température adéquates en vue d'atteindre les caractéristiques de masses molaires de ces copolymères.

A titre préférentiel, la préparation des copolymères selon l'invention sera réalisée par polymérisation cationique vivante au moyen d'un amorceur difonctionnel ou polyfonctionnel et par ajouts séquencés des monomères à polymériser pour la synthèse du bloc « polyisobutène » et des monomères à polymériser pour la synthèse du ou des Blocs Complémentaires.

L'élastomère thermoplastique à blocs selon l'invention TPSI ou TPNSI tel que défini précedemment peut constituer à lui seul la matrice de la composition élastomère ou bien être associé, dans cette composition, à d'autres constituants pour former une matrice élastomérique.

Si d'éventuels autres élastomères sont utilisés dans cette composition, le copolymère bloc tel que décrit précédemment constitue l'élastomère majoritaire en poids, c'est-à-dire que la fraction pondérale du copolymère bloc par rapport à l'ensemble des élastomères constituants de la matrice élastomère est la plus élevée. Le copolymère bloc représente de préférence plus de 50%, plus préférentiellement plus de 70% en poids de l'ensemble des élastomères. De tels élastomères complémentaires pourraient être par exemple des élastomères diéniques ou des élastomères thermoplastiques styréniques (TPS), dans la limite de la compatibilité de leurs microstructures.

A titre d'élastomères diéniques utilisables en complément du copolymère bloc précédemment décrit peuvent être cités notamment les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères isoprène-isobutylène (IIR) ainsi que leurs versions halogénées, les copolymères d'isoprène-butadiène-styrène (SBIR) et les mélanges de tels copolymères.

A titre d'élastomère thermoplastique TPE utilisable en complément du copolymère bloc précédemment décrit peut être cité notamment un élastomère TPS choisi dans le groupe constitué par les copolymères à blocs styrène/ butadiène/ styrène (SBS), les copolymères à blocs styrène/ isoprène/ styrène (SIS), styrène/ butylène/ styrène, les copolymères à blocs styrène/ butadiène/ isoprène/ styrène (SBIS), les copolymères à blocs styrène/ éthylène/ butylène/ styrène (SEBS), les copolymères à blocs styrène/ éthylène/ propylène/ styrène (SEPS), les copolymères à blocs styrène/ éthylène/ éthylène/ propylène/ styrène (SEEPS), les copolymères à blocs styrène/ éthylène/ éthylène/ styrène (SEES) et les mélanges de ces copolymères. Plus préférentiellement, ledit élastomère TPS complémentaire éventuel est choisi dans le groupe constitué par les copolymères à blocs SEBS, les copolymères à blocs SEPS et les mélanges de ces copolymères.

### II-1-B. Matériau thermoplastique

Une caractéristique essentielle de la couche étanche de l'objet pneumatique ou article gonflable selon l'invention est de comporter des microdomaines ou microparticules polymériques thermofusibles.

Par microdomaine ou microparticule, on entend par définition et de manière générale des microdomaines ou microparticules de taille (i.e. plus grande dimension dans le cas de particules anisométriques) micrométrique, c'est-à-dire dont la taille moyenne en nombre est de préférence comprise entre 0,5 µm et 500 µm. Très préférentiellement, la taille moyenne en nombre est comprise entre 1 µm et 50 µm. Un mode opératoire pour déterminer cette taille moyenne en nombre à partir de clichés de microscopie électronique à balayage est décrit ci-après.

Ces microdomaines sont polymériques, c'est-à-dire qu'ils sont constitués d'au moins un polymère et ils sont thermofusibles, c'est-à-dire que par l'action de la température, leur viscosité diminue fortement ; le matériau qui les constitue présente une température de fusion ou une température de ramollissement.

Ces microdomaines sont à base d'au moins un matériau thermoplastique différent du polymère thermoplastique à bloc polyisobutylène constituant de la matrice de la composition de la couche étanche.

La température de fusion d'un matériau thermoplastique cristallin est déterminée par analyse calorimétrique différentielle (DSC) selon la norme ISO 11357.

On rappelle que le point ou la température de ramollissement (en anglais *"softening point*") est la température à laquelle le matériau, par exemple sous forme de poudre, s'agglutine. Le point ou la température de ramollissement d'un matériau thermoplastique est mesuré selon la norme ISO 4625 (méthode *"ring and ball*")*.*

Les microdomaines polymériques thermofusibles ont l'avantage de renforcer l'étanchéité aux gaz de la couche élastomère étanche. Ces microdomaines polymériques thermofusibles sont obtenus lors de la fabrication de la couche élastomère étanche. Cette couche élastomère étanche est réalisée avec un outil d'extrusion par exemple avec une extrudeuse bi-vis. Dans le corps de l'outil d'extrusion, l'élastomère thermoplastique à bloc polyisobutylène, constituant de la matrice de la couche élastomère étanche, et le matériau thermoplastique constituant de ces microdomaines polymériques thermofusibles sont fondus puis malaxés. Après refroidissement du mélange résultant, on observe la présence de ces microdomaines.

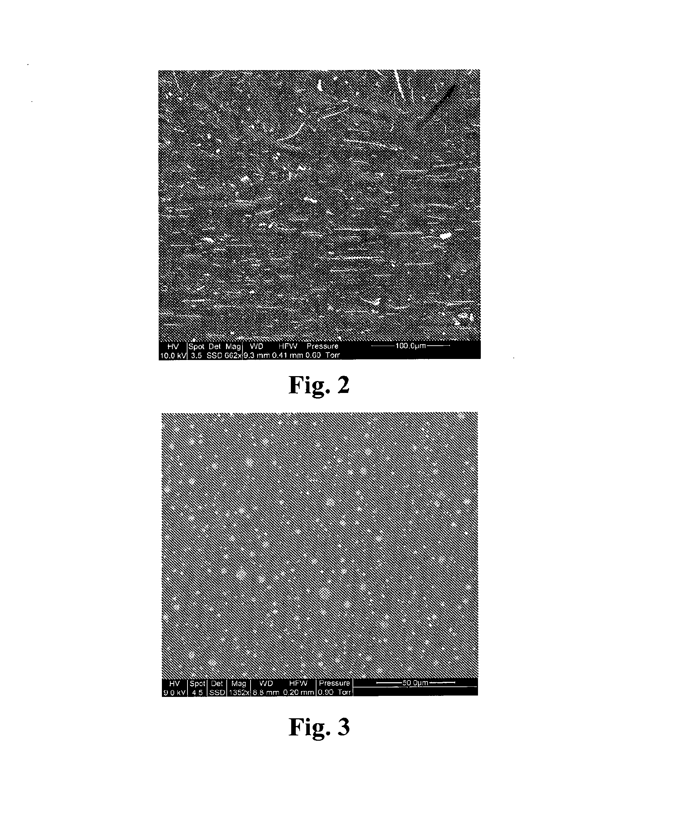

Une caractéristique essentielle de la couche élastomère étanche est de comporter des microdomaines ou microparticules polymériques thermofusibles. Le matériau thermoplastique constituant de ces microdomaines a une structure telle qu'après malaxage à l'état fondu avec l'élastomère thermoplastique à bloc polyisobutylène de la matrice et refroidissement, des microdomaines puissent être observés, par exemple par microscopie électronique à balayage (voir figure 3) ; cette observation illustre l'incompatibilité, au moins partielle, des deux matériaux.

Le matériau thermoplastique présente aussi les caractéristiques préférentielles suivantes :
- sa température de fusion ou de ramollissement est supérieure à 100°C, préférentiellement supérieure à 140°C et très préférentiellement comprise entre 170 et 300°C, afin de permettre la génération des microdomaines pendant la réalisation de la couche élastomère étanche ;
- sa perméabilité à l'air à 60°C est inférieure à 3.10⁻¹⁷ m⁴ N⁻¹ s⁻¹, préférentiellement inférieure à 10⁻¹⁸ m⁴·N⁻¹ s⁻¹ et très préférentiellement inférieure à 10⁻¹⁹ m⁴ N⁻¹ s⁻¹, afin d'améliorer sensiblement l'étanchéité de la composition élastomère étanche.

Préférentiellement, le matériau thermoplastique des microdomaines polymériques thermofusibles est choisi dans le groupe constitué par les polyoléfines, les polymères vinyliques chlorés, les polystyrènes, les polyamides, les polyesters, les copolymères d'éthylène et d'alcool vinylique (EVOH), les polyacrylates, les polyacétals, les élastomères thermoplastiques polyuréthanes (TPU), les copolyesters (COPE), et leurs mélanges.

De préférence, les polyoléfines sont choisies parmi les polyéthylènes et les polypropylènes.

De préférence, les polymères vinyliques chlorés sont choisis parmi les polychlorures de vinyle (PVC), les polychlorures de vinylidène (PVDC), les polychlorures de vinyle surchlorés (PVCC) et leurs mélanges.

De préférence, les polyesters sont choisis parmi les parmi les polyéthylènes téréphtalates (PET), les polybutylènes téréphtalates (PBT), les polycarbonates (PC) et les polyéthylènes naphtalates (PEN), et leurs mélanges.

Les polyamides peuvent être choisis parmi les polyamides aliphatiques et de préférence parmi les polyamides 6, les polyamides 6-6, les polyamides 11 et leurs mélanges.

De préférence, les copolyesters (COPE) sont choisis parmi les polyesteréthers et les polyestersesters.

Un exemple de polyacrylate est le polyméthylméthacrylate (PMMA) ; un exemple de polyacétal est le polyoxyde de méthylène (POM).

De préférence, dans la composition élastomère étanche, le matériau thermoplastique constituant des microdomaines polymériques thermofusibles est à un taux volumique de 3 à 50 % de la composition élastomère étanche, préférentiellement de 5 à 40 % volumique et très préférentiellement de 10 à 40 % volumique.

En-dessous de 3% volumique, l'effet des microdomaines thermoplastiques est insuffisant et au-delà de 50 % volumique, on risque d'observer une inversion de phase entre la matrice élastomérique et le thermoplastique, qui se traduit par une très forte augmentation de rigidité.

### II-1-C. Huile d'extension

Les élastomères thermoplastiques à bloc polyisobutylène et les microdomaines polymériques thermofusibles à base d'un matériau thermoplastique précédemment décrits sont suffisants à eux seuls pour que soit remplie la fonction d'étanchéité aux gaz vis-à-vis des objets pneumatiques dans lesquels ils sont utilisés.

Toutefois, selon un mode de réalisation préférentiel de l'invention, la composition élastomère précédemment décrite comporte également, à titre d'agent plastifiant, une huile d'extension (ou huile plastifiante) dont la fonction est de faciliter la mise en oeuvre de la couche étanche aux gaz, particulièrement son intégration dans l'objet pneumatique par un abaissement du module et une augmentation du pouvoir tackifiant.

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Si l'on a constaté que l'ajout d'huile se faisait certes au prix d'une certaine perte d'étanchéité, variable selon le type et la quantité d'huile utilisée, cette perte d'étanchéité peut être largement corrigée en ajustant le taux du matériau thermoplastique à base des microdomaines.

On utilise préférentiellement une huile du type polybutène, en particulier une huile polyisobutylène (en abrégé « PIB »), qui a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination « Dynapak Poly » (e.g. « Dynapak Poly 190 »), par INEOS Oligomer sous la dénomination « Indopol H1200 »), par BASF sous les dénominations « Glissopal » (e.g. « Glissopal 1000 ») ou « Oppanol» (e.g. « Oppanol B12 ») ; des huiles paraffiniques sont commercialisées par exemple par EXXON sous la dénomination « Telura 618 » ou par Repsol sous la dénomination « Extensol 51 ».

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofurane à une concentration d'environ 1 g/l; puis la solution est filtrée sur filtre de porosité 0,45 µm avant injection. L'appareillage est la chaîne chromatographique « WATERS alliance ». Le solvant d'élution est le tétrahydrofurane, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 µl. Le détecteur est un réfractomètre différentiel «WATERS 2410» et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche élastomère étanche aux gaz, notamment de l'objet pneumatique dans lequel elle est destinée à être utilisée.

On préfère que le taux d'huile d'extension soit supérieur à 5 parties en poids pour cent parties d'élastomère thermoplastique à bloc polyisobutylène, de préférence compris entre 5 et 150 parties.

En dessous du minimum indiqué, la présence d'huile d'extension n'est pas sensible. Au-delà du maximum préconisé, on s'expose à un risque de cohésion insuffisante de la composition et de perte d'étanchéité pouvant être néfaste selon l'application considérée.

Pour ces raisons, en particulier pour une utilisation de la composition étanche dans un bandage pneumatique, on préfère que le taux d'huile d'extension soit supérieur à 10 parties, notamment compris entre 10 et 130 parties, plus préférentiellement encore qu'il soit supérieur à 20 parties, notamment compris entre 20 et 100 parties.

### II-1-D. Charge lamellaire

Pour augmenter encore l'étanchéité de la couche élastomère étanche, on peut utiliser une charge lamellaire. L'utilisation, optionnelle, de charge lamellaire permet avantageusement d'abaisser le coefficient de perméabilité (donc d'augmenter l'étanchéité) de la composition élastomère, sans augmenter de façon excessive son module, ce qui permet de conserver la facilité d'intégration de la couche étanche dans l'objet pneumatique.

Les charges dites lamellaires (en anglais *"platy fillers*") sont bien connues de l'homme du métier. Elles ont été utilisées notamment dans des bandages pneumatiques pour réduire la perméabilité des couches étanches aux gaz conventionnelles à base de caoutchouc butyl. Dans ces couches à base de butyl, elles sont généralement utilisées à des taux relativement faibles, n'excédant pas le plus souvent 10 à 15 parties en poids pour cent parties d'élastomère (« pce ») (voir par exemple les documents brevet US 2004/0194863, WO 2006/047509).

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 voire 800 µm).

Préférentiellement, les charges lamellaires utilisées sont choisies dans le groupe constitué par les graphites, les phyllosilicates et les mélanges de telles charges. Parmi les phyllosilicates, on citera notamment les argiles, talcs, micas, kaolins, ces phyllosilicates pouvant être modifiés ou non par exemple par un traitement de surface ; à titre d'exemples de tels phyllosilicates modifiés, on peut citer notamment des micas recouverts d'oxyde de titane, des argiles modifiées par des tensioactifs (*"organo clays*").

On utilise préférentiellement des charges lamellaires à faible énergie de surface, c'est-à-dire relativement apolaires, telles que celles choisies dans le groupe constitué par les graphites, les talcs, les micas et les mélanges de telles charges, ces dernières pouvant être modifiées ou non, plus préférentiellement encore dans le groupe constitué par les micas et les mélanges de telles charges.

Parmi les graphites peuvent être cités notamment les graphites naturels, les graphites expansés ou les graphites synthétiques.

Comme exemple de talcs, on peut citer les talcs commercialisés par la société Luzenac.

Comme exemples de graphites, on peut citer les graphites commercialisés par la société Timcal (gamme « Timrex »).

Comme exemples de micas, on peut citer les micas commercialisés par la société CMMP (« Mica-MU », « Mica-Soft », « Briomica » par exemple), ceux commercialisés par la société YAMAGUCHI (A51S, A41S, SYA-21R, SYA-21RS, A21S, SYA-41R), les vermiculites (notamment la vermiculite « Shawatec » commercialisée par CMMP ou la vermiculite « Microlite » commercialisée par W.R. Grace), les micas modifiés ou traités (par exemple, la gamme « Iriodin » commercialisée par Merck).

Les charges lamellaires décrites ci-dessus peuvent être utilisées, à titre complémentaire des microdomaines polymériques thermofusibles, à des taux variables, notamment compris entre 2 et 20 % en volume de composition élastomère.

L'introduction des charges lamellaires dans la composition thermoplastique élastomère peut être réalisée selon divers procédés connus, par exemple par extrusion bi-vis.

Il est particulièrement intéressant de noter que lors de l'introduction des charges lamellaires dans un élastomère thermoplastique à blocs à l'état liquide, les efforts de cisaillement dans la composition sont très réduits et ne modifient que très peu les distributions de taille et le facteur de forme initial des charges lamellaires.

### II-1-E. Additifs divers

La couche ou composition étanche à l'air décrite précédemment peut comporter par ailleurs les divers additifs usuellement présents dans les couches étanches à l'air connues de l'homme du métier. On citera par exemple des charges renforçantes telles que du noir de carbone ou de la silice, des charges non renforçantes ou inertes autres que les charges précédemment décrites, des agents colorants avantageusement utilisables pour la coloration de la composition, des plastifiants autres que les huiles d'extension précitées, des résines tackifiantes, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

La couche ou composition étanche aux gaz précédemment décrite est un composé solide (à 23°C) et élastique, qui se caractérise notamment, grâce à sa formulation spécifique, par une très haute souplesse et très haute déformabilité.

### II-2. Fabrication de la composition élastomère étanche

La fabrication de la composition élastomère étanche est avantageusement réalisée au moyen d'un outil d'extrusion, préférentiellement avec une extrudeuse bi-vis. Une telle extrudeuse permet d'obtenir à la fois la fusion des constituants thermoplastiques de la composition et leur malaxage intime.

On considère T_{M1}, la température de fusion ou de ramollissement donnée de l'élastomère thermoplastique à bloc polyisobutylène et T_{M2} la température de fusion ou de ramollissement donnée du matériau thermoplastique.

Le procédé de fabrication comporte les étapes suivantes :
- introduire l'élastomère thermoplastique et le matériau thermoplastique dans la ou les alimentations de l'extrudeuse bi-vis ;
- faire fondre et malaxer les constituants en portant l'ensemble à une température de malaxage (T_{M}) supérieure aux deux températures de fusion ou de ramollissement données (T_{M1}, T_{M2}) pendant le transfert dans le corps de l'extrudeuse bi-vis ; et
- distribuer la composition résultante à la sortie de l'extrudeuse bi-vis avec une filière de section adaptée.

Le corps de l'extrudeuse bi-vis est porté à une température T_{M} supérieure aux deux températures de fusion ou de ramollissement des composants thermoplastiques de la composition. Cela permet d'assurer, pendant le transfert des constituants dans le corps de l'extrudeuse, à la fois la fusion des deux constituants thermoplastiques et leur malaxage. L'écart de température doit être supérieur à 5°C pour que la fusion soit complète et est de préférence supérieure à 10°C.

A la sortie de l'extrudeuse bi-vis, on peut installer une filière de section adaptée pour l'usage prévu de la couche élastomère étanche. Par exemple une filière plate pour obtenir un profilé plat prêt à être introduit dans l'ébauche du bandage pneumatique.

A la sortie de la filière, comme bien connu par un homme du métier, le profilé peut être reçu par un intercalaire de protection placé sur un tapis mobile et ensuite stocké sous forme de bobine.

L'élastomère thermoplastique à bloc polyisobutylène et le matériau thermoplastique peuvent être introduits en même temps dans le corps de l'extrudeuse au moyen d'une même alimentation.

On peut aussi introduire en même temps ou ultérieurement l'huile d'extension optionnelle de l'élastomère et les additifs éventuels.

Le procédé de fabrication de la couche élastomère étanche a comme caractéristique essentielle de réaliser le malaxage des deux constituants thermoplastiques à l'état fondu. Cela permet d'obtenir des microdomaines ou microparticules polymériques thermofusibles de tailles et de répartition adaptées.

### II-3. Utilisation de la couche étanche à l'air dans un bandage pneumatique

La composition à base d'élastomère thermoplastique précédemment décrite est utilisable comme couche étanche à l'air dans tout type d'objet pneumatique ou article gonflable. A titre d'exemples de tels objets pneumatiques ou articles gonflables, on peut citer les bateaux pneumatiques, les ballons ou balles utilisées pour le jeu ou le sport.

Elle est particulièrement bien adaptée à une utilisation comme couche étanche à l'air (ou tout autre gaz de gonflage, par exemple azote) dans un objet pneumatique, produit fini ou semi-fini, en caoutchouc, tout particulièrement dans un bandage pneumatique pour véhicule automobile tel qu'un véhicule de type deux roues, tourisme ou industriel.

Une telle couche étanche à l'air est préférentiellement disposée sur la paroi interne de l'objet pneumatique, mais elle peut être également intégrée complètement à sa structure interne.

L'épaisseur de la couche étanche à l'air est préférentiellement supérieure à 0,05 mm, plus préférentiellement comprise entre 0,1 mm et 10 mm (notamment entre 0,1 et 1,0 mm).

On comprendra aisément que, selon les domaines d'application spécifiques, les dimensions et les pressions enjeu, le mode de mise en oeuvre de l'invention peut varier, la couche étanche à l'air comportant alors plusieurs gammes d'épaisseur préférentielles.

Ainsi par exemple, pour des bandages pneumatiques de type tourisme, elle peut avoir une épaisseur d'au moins 0,4 mm, préférentiellement comprise entre 0,8 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

Comparativement à une couche étanche à l'air telle que divulguée dans le document WO 2009/007064 A1, la couche étanche à l'air selon l'invention a l'avantage d'être moins coûteuse, moins dense, plus facile à réaliser et enfin d'avoir une résistance à la fissuration et à la rupture améliorée tout en conservant une étanchéité aux gaz au moins égale.

### III. EXEMPLES DE RÉALISATION DE L'INVENTION

La couche étanche aux gaz précédemment décrite est avantageusement utilisable dans les bandages pneumatiques de tous types de véhicules, en particulier véhicules tourisme ou véhicules industriels tels que Poids-lourd.

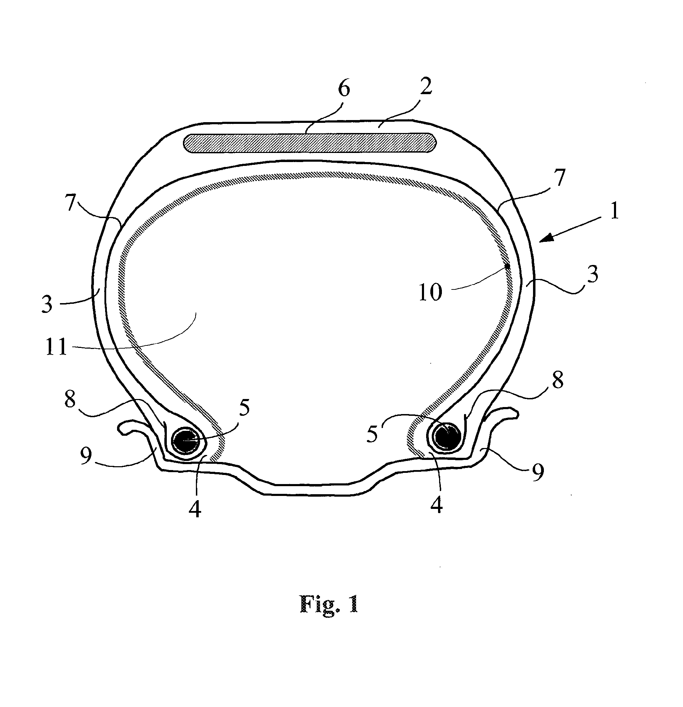

A titre d'exemple, la fig. 1 annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du côté de la cavité interne 11 du bandage pneumatique 1.

Cette couche interne (ou gomme intérieure, en anglais *"inner liner*") couvre toute la paroi interne du bandage pneumatique, se prolongeant d'un flanc à l'autre, au moins jusqu'au niveau du crochet de jante lorsque le bandage pneumatique est en position montée. Elle définit la face radialement interne dudit bandage destinée à protéger l'armature de carcasse de la diffusion d'air provenant de l'espace 11 intérieur au bandage. Elle permet le gonflement et le maintien sous pression du bandage pneumatique ; ses propriétés d'étanchéité doivent lui permettre de garantir un taux de perte de pression relativement faible, de maintenir le bandage gonflé, en état de fonctionnement normal, pendant une durée suffisante, normalement de plusieurs semaines ou plusieurs mois.

Contrairement à un bandage pneumatique conventionnel utilisant une composition à base de caoutchouc butyl, le bandage pneumatique conforme à l'invention utilise dans cet exemple, comme couche 10 étanche à l'air, une composition élastomère comportant un élastomère SIBS (« Sibstar 102T » avec un taux de styrène d'environ 15 %, une Tg du bloc polyisobutylène d'environ -65°C et une Mn d'environ 90 000 g/mol) et un matériau thermoplastique (par exemple 10 % volumique de PET « Arnite A06101 »), cette composition étant ici étendue avec une huile PIB (par exemple 67 parties d'huile « H-1200 INEOS »).

Le pneumatique pourvu de sa couche étanche à l'air 10 tel que décrit ci-dessus peut être réalisé avant ou après vulcanisation (ou cuisson).

Dans le premier cas (i.e. avant cuisson du bandage pneumatique), la couche étanche à l'air est simplement appliquée de façon conventionnelle à l'endroit souhaité, pour formation de la couche 10. La vulcanisation est ensuite effectuée classiquement.

Une variante de fabrication avantageuse, pour l'homme du métier des bandages pneumatiques, consiste par exemple au cours d'une première étape, à déposer à plat la couche étanche à l'air directement sur un tambour de confection, sous la forme d'une couche ("*skim*") d'épaisseur adaptée, avant de recouvrir cette dernière avec le reste de la structure du bandage pneumatique, selon des techniques de fabrication bien connues de l'homme du métier.

Dans le second cas (i.e. après cuisson du bandage pneumatique), la couche étanche est appliquée à l'intérieur du bandage pneumatique cuit par tout moyen approprié, par exemple par collage, par pulvérisation ou encore extrusion et application directe d'un profilé d'épaisseur appropriée.

### III-1. Tests

### A Test d'étanchéité

Dans les exemples qui suivent, les propriétés d'étanchéité ont été analysées sur des éprouvettes de compositions à base d'élastomère thermoplastique (avec et sans microdomaines polymériques thermofusibles et charge lamellaire).

Pour cette analyse, on a utilisé un perméamètre à parois rigides, placé dans une étuve (température de 60°C dans le cas présent), muni d'un capteur de pression relative (étalonné dans le domaine de 0 à 6 bars) et relié à un tube équipé d'une valve de gonflage. Le perméamètre peut recevoir des éprouvettes standard sous forme de disque (par exemple de diamètre 65 mm dans le cas présent) et d'épaisseur uniforme pouvant aller jusqu'à 3 mm (0,5 mm dans le cas présent). Le capteur de pression est connecté à une carte d'acquisition de données *National Instruments* (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire donnant la pente α de la perte de pression à travers l'éprouvette testée en fonction du temps, après stabilisation du système c'est-à-dire obtention d'un régime stable au cours duquel la pression décroît linéairement en fonction du temps. La pression initiale de mesure est par exemple comprise entre 4 et 3,4 bars.

### B Observations microscopiques

Des observations microscopiques ont été réalisées avec un microscope électronique à balayage pour déterminer la présence de particules et leur taille.

Les échantillons ont subi une coupe mécanique et n'ont pas été métallisés. Les photographies présentées ont été prise par un microscope environnemental de marque FEI, modèle Quanta, série 400F, avec une tension d'accélération (HV) de 9kV à l'aide d'un détecteur d'électrons rétrodiffusés.

Les photographies ont été exploitées avec un logiciel Analysis Pro 5.0 en suivant un protocole connu de l'homme de l'art visant à augmenter le contraste et diminuer le bruit.

Le protocole est le suivant :
- Application du filtre Sigma pour éliminer les bruits (lissage de pixel) ;
- Application du filtre DCE pour faire ressortir les contrastes ;
- Re-application du filtre Sigma ;
- Binarisation de l'image pour identifier les contours de la charge (transformation d'une palette de gris en noir et blanc) ;
- Application du filtre d'Ouverture morphologique pour éliminer les pixels seuls ;
- Application d'un cut-off à 1 pixel ;
- Application de la moyenne DCE.

Le résultat de l'analyse est une valeur de taille moyenne en nombre de particules en µm.

### C Test de rupture

Des essais de traction à la rupture ont été réalisés sur des éprouvettes ASTM C, à température ambiante. Les résultats correspondent à la contrainte nominale à la rupture et l'allongement à la rupture.

### III-2. Essais

### A Exemple I

Deux compositions étanches aux gaz contenant les composants présentés dans le tableau 1 ont été préparées de façon classique par incorporation des différents composants dans une extrudeuse bi-vis, de façon à réaliser la fusion de la matrice et du matériau thermoplastique constituant des microdomaines thermoplastiques ainsi qu'une incorporation de tous les ingrédients. Une filière plate en sortie de l'extrudeuse a permis de mettre en forme un profilé, déposé sur un intercalaire.

Les deux compositions comportent la même matrice élastomère (SIBS étendu d'huile PIB). La première comporte en plus une charge lamellaire à un taux volumique de 10 %, la seconde un polyester téréphtalate (PET) de la société DSM Plastic Engineering « Arnite A06 101 ») au même taux volumique de 10 %. La température de fusion de ce polyester est de 255°C.

Pour la première composition, la température du corps de l'extrudeuse est réglée à 250°C, pour la seconde cette température est de 270°C, soit 15°C au-dessus de la température de fusion du PET pour réaliser le malaxage à l'état fondu.

Les formulations et leurs résultats de tests sont indiqués dans le tableau 1 qui suit. Les taux de plastifiant sont exprimés en pce, ceux de charge lamellaire ou de matériau thermoplastique en % volumique (par rapport au volume total de la composition d'élastomère TPS) ainsi qu'en pce (par rapport au poids d'élastomère SIBS). Par « pce » on entend ici partie en poids pour 100 parties massiques d'élastomère SIBS.

**Tableau 1**

| Composition N°: | ECI-1 | I-2 |
|---|---|---|
| SIBS - Sibstar 102 T - KANEKA - (pce) | 100 | 100 |
| Huile PIB H1200 - INEOS - (pce) | 67 | 67 |
| SYA41R YAMAGUCHI - % volumique (pce) | 10 (57.4) | |
| PET Arnite A06101 - DSM Engineering Plastics - % volumique (pce) | | 10 (27) |
| Etanchéité relative (K₀/K) | 100 | 42 |
| contrainte rupture (en base 100) | 100 | 185 |
| allongement rupture (en base 100) | 100 | 370 |
| taille moyenne en nombre des particules de charges / microdomaines thermoplastiques (µm) | 42 | 1.9 |

La masse volumique du SIBS est de 0,92 g/cm³, celle de l'huile PIB de 0,89 g/cm³, celle du PET de 1,34 g/cm³, et celle du mica SYA41R de 1,45 g/cm³.

Les figures 2 et 3 présentent une observation microscopique d'un échantillon de la composition ECI-1 (fig. 2) et de la composition I-2 (fig. 3). On note tout d'abord la présence dans la figure 3 de nombreux microdomaines ou microparticules de taille moyenne en nombre de l'ordre de 2 µm. Cela confirme que le PET est bien incompatible avec l'élastomère SIBS et qu'il y a séparation de phases entre le PET et la matrice élastomère et création de ces microdomaines. Ces microdomaines sont sphériques. Il est donc compréhensible qu'à même taux volumique la perméabilité de la composition avec les microdomaines thermoplastiques PET soit plus élevée que celle comportant les charges lamellaires de très haut facteur de forme (voir fig. 2) (effet de tortuosité).

En revanche, on note une amélioration très sensible des propriétés à la rupture de la composition I-2 relativement à l'exemple comparatif ECI-1 puisque la contrainte à rupture est passée de 100 à 184 et la déformation à rupture de 100 à 370.

### B Exemple II

**Tableau 2**

| Composition N° : | EC-1 | EC-2 | EC-3 | C-4 | C-5 |
|---|---|---|---|---|---|
| Elastomère butyl (1) | 100 | | | | |
| SIBS - Sibstar 102T | | 100 | 100 | 100 | 100 |
| Noir de carbone (N772) (pce) | 50 | | | | |
| Huile PIB - INDOPOL H1200 (pce) | | 67 | 25 | 67 | 25 |
| Oxyde de zinc (pce) | 1,5 | | | | |
| Acide stéarique (pce) | 1,5 | | | | |
| Accélérateur (2) (pce) | 1,2 | | | | |
| Soufre (pce) | 1,5 | | | | |
| PET - Arnite A06101 % volumique (pce) | | | | 40 (162) | |
| PET - Arnite A06300 %volumique (pce) | | | | | 30 (77.2) |
| Etanchéité relative (K₀/K) | 100,0 | 77,2 | 81,8 | **116** | **131** |

| | | | | | |
|---|---|---|---|---|---|
| (1) : Polyisobutylène bromé « BROMOBUTYL 3220 » commercialisé par la société Exxon Chemical Co ; (2) : Disulfure de 2-mercaptobenzothiazyle, MBTS. | | | | | |

Ce second exemple montre l'efficacité de la présence de microdomaines thermoplastiques tels que décrit pour renforcer l'étanchéité d'une composition à base d'un élastomère thermoplastique SIBS.

Cet exemple comporte trois compositions de référence « EC ») : EC-1 correspond à une formulation usuelle de gomme intérieure à base de caoutchouc butyl, EC-2 et EC-3 à la matrice d'élastomère thermoplastique SIBS étendue par respectivement 67 parties et 25 parties d'huile PIB. L'étanchéité de la matrice étendue est inférieure d'environ 20 à 30% à celle d'une gomme intérieure usuelle.

En comparaison de la composition EC-2, la composition C-4 montre que l'adjonction de thermoplastique PET permet d'améliorer de façon très marquée l'étanchéité de la composition et même d'obtenir une performance significativement supérieure à celle des gommes intérieures usuelles.

On retrouve la même évolution pour la composition C-5 comparée à la composition EC-3 pour lesquelles le taux d'huile PIB est inférieur et dans laquelle on a étudié un autre grade de PET.

## Revendications

1. Objet pneumatique ou article gonflable pourvu d'une couche élastomère étanche aux gaz, comportant, à titre de seul élastomère ou d'élastomère majoritaire en poids, au moins un élastomère thermoplastique à bloc polyisobutylène, **caractérisé en ce que** ladite couche élastomère étanche comporte des microdomaines polymériques thermofusibles à base d'au moins un matériau thermoplastique.

2. Objet pneumatique ou article gonflable selon la revendication précédente, dans lequel le matériau thermoplastique desdits microdomaines polymériques thermofusibles est choisi dans le groupe constitué par les polyoléfines, les polymères vinyliques chlorés, les polystyrènes, les polyamides, les polyesters, les copolymères d'éthylène et d'alcool vinylique (EVOH), les polyacrylates, les polyacétals, les élastomères thermoplastiques polyuréthanes (TPU), les copolyesters (COPE), et leurs mélanges.

3. Objet pneumatique ou article gonflable selon la revendication 2, dans lequel les polyoléfines sont choisies parmi les polyéthylènes et les polypropylènes.

4. Objet pneumatique ou article gonflable selon l'une des revendications 2 et 3, dans lequel les polymères vinyliques chlorés sont choisis parmi les polychlorures de vinyle (PVC), les polychlorures de vinylidène (PVDC), les polychlorures de vinyle surchlorés (PVCC) et leurs mélanges.

5. Objet pneumatique ou article gonflable selon l'une quelconque des revendication 2 à 4, dans lequel les polyesters sont choisis parmi les polyéthylène téréphtalates (PET), les polybutylène téréphtalates (PBT), les polycarbonates (PC) et les polyéthylène naphtalates (PEN) et leurs mélanges.

6. Objet pneumatique ou article gonflable selon l'une des revendications 2 à 5, dans lequel les polyamides sont choisis parmi les polyamides aliphatiques et de préférence parmi les polyamides 6, les polyamides 6-6, les polyamides 11 et leurs mélanges.

7. Objet pneumatique ou article gonflable selon l'une des revendications 2 à 6, dans lequel les copolyesters (COPE) sont choisis parmi les polyesteréthers et les polyestersesters.

8. Objet pneumatique ou article gonflable selon l'une quelconque des revendications précédentes, dans lequel les microdomaines polymériques thermofusibles ont une taille moyenne en nombre comprise entre 0,5 et 500 µm et de préférence comprise entre 1 et 50 µm.

9. Objet pneumatique ou article gonflable selon l'une quelconque des revendications précédentes, dans lequel l'élastomère thermoplastique à bloc polyisobutylène comporte au moins un bloc thermoplastique complémentaire constitué d'au moins un monomère polymérisé choisi dans le groupe des styrène, méthylstyrènes, para-tertio-butylstyrène, chlorostyrènes, bromostyrènes, fluorostyrènes, para-hydroxy-styrène, l'acénaphthylène, l'indène, le 2-méthylindène, le 3-méthylindène, le 4-méthylindène, les diméthyl-indène, le 2-phénylindène, le 3-phénylindène, le 4-phénylindène, l'isoprène, les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile.

10. Objet pneumatique ou article gonflable selon la revendication 9, dans lequel l'élastomère thermoplastique à bloc polyisobutylène est choisi dans le groupe des copolymères dibloc styrène/ isobutylène (« SIB ») et des copolymères tribloc styrène/ isobutylène/ styrène (« SIBS »).

11. Objet pneumatique ou article gonflable selon l'une quelconque des revendications 9 et 10, dans lequel la température de transition vitreuse (Tg) dudit bloc thermoplastique complémentaire est supérieure ou égale à 100°C.

12. Objet pneumatique ou article gonflable selon l'une quelconque des revendications précédentes, dans lequel le matériau thermoplastique constituant des microdomaines polymériques thermofusibles est à un taux volumique de 3 à 50 % de la composition élastomère étanche, préférentiellement de 5 à 40 % volumique et très préférentiellement de 10 à 40 % volumique.

13. Objet pneumatique ou article gonflable selon l'une quelconque des revendications précédentes, dans lequel ledit objet est en caoutchouc.

14. Objet pneumatique ou article gonflable selon la revendication 13, dans lequel ledit objet est un bandage pneumatique.

15. Objet pneumatique ou article gonflable selon la revendication 13, dans lequel ledit objet pneumatique est une chambre à air.

16. Procédé de fabrication d'une composition élastomère étanche aux gaz pour la fabrication d'un objet pneumatique ou article gonflable selon l'une quelconque des revendications précédentes, ladite composition comportant, à titre de seul élastomère ou d'élastomère majoritaire en poids, un élastomère thermoplastique à bloc polyisobutylène de température de fusion ou de ramollissement donnée (T_{M1}) et un matériau thermoplastique de température de fusion ou de ramollissement donnée (T_{M2}) au moyen d'un outil d'extrusion avec au moins une alimentation et une sortie, ledit procédé comportant les étapes suivantes :
- introduire l'élastomère thermoplastique et le matériau thermoplastique dans la ou les alimentations de l'outil d'extrusion ;
- faire fondre et malaxer les constituants en portant l'ensemble à une température de malaxage (T_{M}) supérieure aux deux températures de fusion ou de ramollissement données (T_{M1}, T_{M2}) pendant le transfert dans le corps de l'outil d'extrusion ;
- distribuer la composition résultante à la sortie de l'outil d'extrusion bi-vis avec une filière de section adaptée.

## Patentansprüche

1. Pneumatisches Objekt oder aufblasbarer Artikel, das bzw. der mit einer gasdichten Elastomerschicht versehen ist, die als einziges Elastomer oder gewichtsmäßig überwiegendes Elastomer mindestens ein thermoplastisches Elastomer mit Polyisobutylenblock umfasst, **dadurch gekennzeichnet, dass** die dichte Elastomerschicht wärmeschmelzbare Polymermikrodomänen auf Basis mindestens eines thermoplastischen Materials umfasst.

2. Pneumatisches Objekt oder aufblasbarer Artikel nach dem vorhergehenden Anspruch, wobei das thermoplastische Material der wärmeschmelzbaren Polymermikrodomänen aus der Gruppe bestehend aus Polyolefinen, chlorierten Vinylpolymeren, Polystyrolen, Polyamiden, Polyestern, Copolymeren von Ethylen und Vinylalkohol (EVOH), Polyacrylaten, Polyacetalen, thermoplastischen Polyurethanelastomeren (TPU), Copolyestern (COPE) und Mischungen davon ausgewählt ist.

3. Pneumatisches Objekt oder aufblasbarer Artikel nach Anspruch 2, wobei die Polyolefine aus Polyethylenen und Polypropylenen ausgewählt sind.

4. Pneumatisches Objekt oder aufblasbarer Artikel nach einem der Ansprüche 2 und 3, wobei die chlorierten Vinylpolymere aus Polyvinylchloriden (PVC), Polyvinylidenchloriden (PVDC), nachchlorierten Polyvinylchloriden (CPVC) und Mischungen davon ausgewählt sind.

5. Pneumatisches Objekt oder aufblasbarer Artikel nach einem der Ansprüche 2 bis 4, wobei die Polyester aus Polyethylenterephthalaten (PET), Polybutylenterephthalaten (PBT), Polycarbonaten (PC) und Polyethylennaphthalaten (PEN) und Mischungen davon ausgewählt sind.

6. Pneumatisches Objekt oder aufblasbarer Artikel nach einem der Ansprüche 2 bis 5, wobei die Polyamide aus aliphatischen Polyamiden und vorzugsweise Polyamiden 6, Polyamiden 6-6, Polyamiden 11 und Mischungen davon ausgewählt sind.

7. Pneumatisches Objekt oder aufblasbarer Artikel nach einem der Ansprüche 2 bis 6, wobei die Copolyester (COPE) aus Polyesterethern und Polyesterestern ausgewählt sind.

8. Pneumatisches Objekt oder aufblasbarer Artikel nach einem der vorhergehenden Ansprüche, wobei die wärmeschmelzbaren Polymermikrodomänen eine zahlenmittlere Größe zwischen 0,5 und 500 µm und vorzugsweise zwischen 1 und 50 µm aufweisen.

9. Pneumatisches Objekt oder aufblasbarer Artikel nach einem der vorhergehenden Ansprüche, wobei das thermoplastische Elastomer mit Polyisobutylenblock mindestens einen zusätzlichen thermoplastischen Block umfasst, der aus mindestens einem polymerisierten Monomer aus der Gruppe bestehend aus Styrol, Methylstyrolen, para-(tert-Butyl)styrol, Chlorstyrolen, Bromstyrolen, Fluorstyrolen, para-Hydroxystyrol, Acenaphthylen, Inden, 2-Methylinden, 3-Methylinden, 4-Methylinden, Dimethylindenen, 2-Phenylinden, 3-Phenylinden, 4-Phenylinden, Isopren, Estern von Acrylsäure, Crotonsäure, Sorbinsäure und Methacrylsäure, Derivaten von Acrylamid, Derivaten von Methacrylamid, Derivaten von Acrylnitril und Derivaten von Methacrylnitril besteht.

10. Pneumatisches Objekt oder aufblasbarer Artikel nach Anspruch 9, wobei das thermoplastische Elastomer mit Polyisobutylenblock aus der Gruppe von Styrol/Isobutylen-Diblockcopolymeren ("SIB") und Styrol/Isobutylen/Styrol-Triblockcopolymeren ("SIBS") ausgewählt ist.

11. Pneumatisches Objekt oder aufblasbarer Artikel nach einem der Ansprüche 9 und 10, wobei die Glasübergangstemperatur (Tg) des zusätzlichen thermoplastischen Blocks größer gleich 100°C ist.

12. Pneumatisches Objekt oder aufblasbarer Artikel nach einem der vorhergehenden Ansprüche, wobei das thermoplastische Material, aus dem die wärmeschmelzbaren Polymermikrodomänen bestehen, in einem Volumengehalt von 3 bis 50% der dichten Elastomerzusammensetzung, vorzugsweise 5 bis 40 Vol.-% und ganz besonders bevorzugt 10 bis 40 Vol.-% vorliegt.

13. Pneumatisches Objekt oder aufblasbarer Artikel nach einem der vorhergehenden Ansprüche, wobei das Objekt aus Kautschuk besteht.

14. Pneumatisches Objekt oder aufblasbarer Artikel nach Anspruch 13, wobei es sich bei dem Objekt um einen Luftreifen handelt.

15. Pneumatisches Objekt oder aufblasbarer Artikel nach Anspruch 13, wobei es sich bei dem pneumatischen Objekt um einen Luftschlauch handelt.

16. Verfahren zur Herstellung einer gasdichten Elastomerschicht zur Herstellung eines pneumatischen Objekts oder eines aufblasbaren Artikels nach einem der vorhergehenden Ansprüche, wobei die Zusammensetzung als einziges Elastomer oder gewichtsmäßig überwiegendes Elastomer mindestens ein thermoplastisches Elastomer mit Polyisobutylenblock mit einer gegebenen Schmelz-oder Erweichungstemperatur (T_{M1}) und ein thermoplastisches Material mit einer gegebenen Schmelz- oder Erweichungstemperatur (T_{M2}) umfasst, mit Hilfe eines Extrusionswerkzeugs mit mindestens einer Einspeisung und einem Ausgang, wobei das Verfahren folgende Schritte umfasst:
- Eintragen des thermoplastischen Elastomers und des thermoplastischen Materials in die Einspeisung bzw. Einspeisungen des Extrusionswerzeugs;
- Aufschmelzen und Kneten der Bestandteile durch Bringen des Ganzen auf eine Knettemperatur (T_{M}), die größer als die beiden gegebenen Schmelz-oder Erweichungstemperaturen (T_{M1}, T_{M2}) ist, während der Überführung in den Körper des Extrusionswerkzeugs;
- Verteilen der am Ausgang des Doppelschnecken-Extrusionswerkzeugs erhaltenen Zusammensetzung mit einer Düse mit einem geeigneten Querschnitt.

## Claims

1. Pneumatic object or inflatable article provided with a gastight elastomer layer, comprising, as the sole elastomer or as the predominant elastomer by weight, at least one thermoplastic polyisobutylene block elastomer, **characterized in that** said airtight elastomer layer comprises hot-melt polymer microdomains based on at least one thermoplastic material.

2. Pneumatic object or inflatable article according to the preceding claim, in which the thermoplastic material of said hot-melt polymer microdomains is selected from the group consisting of polyolefins, chlorinated vinyl polymers, polystyrenes, polyamides, polyesters, copolymers of ethylene and vinyl alcohol (EVOH), polyacrylates, polyacetals, thermoplastic polyurethane (TPU) elastomers, copolyesters (COPEs), and mixtures thereof.

3. Pneumatic object or inflatable article according to Claim 2, in which the polyolefins are selected from polyethylenes and polypropylenes.

4. Pneumatic object or inflatable article according to either of Claims 2 and 3, in which the chlorinated vinyl polymers are selected from polyvinyl chlorides (PVCs), polyvinylidene chlorides (PVDCs), chlorinated polyvinyl chlorides (CPVCs) and mixtures thereof.

5. Pneumatic object or inflatable article according to any one of Claims 2 to 4, in which the polyesters are selected from polyethylene terephthalates (PETs), polybutylene terephthalates (PBTs), polycarbonates (PCs) and polyethylene naphthalates (PENs) and mixtures thereof.

6. Pneumatic object or inflatable article according to one of Claims 2 to 5, in which the polyamides are selected from aliphatic polyamides and preferably from polyamides 6, polyamides 6-6, polyamides 11 and mixtures thereof.

7. Pneumatic object or inflatable article according to one of Claims 2 to 6, in which the copolyesters (COPEs) are selected from poly(ester-ether)s and poly(ester-ester)s.

8. Pneumatic object or inflatable article according to any one of the preceding claims, in which the hot-melt polymer microdomains have a number-average size between 0.5 and 500 µm and preferably between 1 and 50 µm.

9. Pneumatic object or inflatable article according to any one of the preceding claims, in which the thermoplastic polyisobutylene block elastomer comprises at least one additional thermoplastic block consisting of at least one polymerized monomer selected from the group consisting of styrene, methylstyrenes, *para*-(*tert*-butyl)styrene, chlorostyrenes, bromostyrenes, fluorostyrenes, *para*-hydroxystyrene, acenaphthylene, indene, 2-methylindene, 3-methylindene, 4-methylindene, dimethylindenes, 2-phenylindene, 3-phenylindene, 4-phenylindene, isoprene, esters of acrylic acid, crotonic acid, sorbic acid and methacrylic acid, derivatives of acrylamide, derivatives of methacrylamide, derivatives of acrylonitrile and derivatives of methacrylonitrile.

10. Pneumatic object or inflatable article according to Claim 9, in which the thermoplastic polyisobutylene block elastomer is selected from the group consisting of styrene/isobutylene diblock copolymers ("SIBs") and styrene/isobutylene/styrene triblock copolymers ("SIBSs").

11. Pneumatic object or inflatable article according to any one of Claims 9 and 10, in which the glass transition temperature (Tg) of said additional thermoplastic block is greater than or equal to 100°C.

12. Pneumatic object or inflatable article according to any one of the preceding claims, in which the thermoplastic material constituting hot-melt polymer microdomains is at a volume content of 3% to 50% of the airtight elastomer composition, preferably 5% to 40% by volume and very preferably 10% to 40% by volume.

13. Pneumatic object or inflatable article according to any one of the preceding claims, in which said object is made of rubber.

14. Pneumatic object or inflatable article according to Claim 13, in which said object is a pneumatic tyre.

15. Pneumatic object or inflatable article according to Claim 13, in which said pneumatic object is an inner tube.

16. Process for manufacturing a gastight elastomer composition for the manufacture of a pneumatic object or inflatable article according to any one of the preceding claims, said composition comprising, as the sole elastomer or as the predominant elastomer by weight, a thermoplastic polyisobutylene block elastomer having a given melting or softening temperature (T_{M1}) and a thermoplastic material having a given melting or softening temperature (T_{M2}) using an extrusion tool with at least a feed and an outlet, said process comprising the following steps:
- introducing the thermoplastic elastomer and the thermoplastic material into the feed(s) of the extrusion tool;
- melting and kneading the constituents by bringing all the constituents to a kneading temperature (T_{M}) above both the given melting or softening temperatures (T_{M1}, T_{M2}) during the transfer into the body of the extrusion tool;
- dispensing the resulting composition at the outlet of the twin-screw extrusion tool with a die of suitable cross section.
